# EUROPÄISCHE PATENTANMELDUNG

(11) **EP 2 327 899 A2**
(43) Veröffentlichungstag der Anmeldung: **01.06.2011**
(21) Anmeldenummer: 10014931.9
(22) Anmeldetag: 24.11.2010
(51) Int. Cl.: F16D 7/04

(54) **Drehmoment begrenzende Kupplung**

(30) Priorität: 25.11.2009 DE 102009055795
(71) Anmelder: Schwelling, Hermann, 88682 Salem (DE)
(72) Erfinder: Schwelling, Hermann, 88682 Salem (DE)
(74) Vertreter: Fürst, Siegfried

(57) **Zusammenfassung**

Die Erfindung bezieht sich auf eine Drehmoment begrenzende Kupplung geringer Baugröße sowie auf Vorrichtungen, in denen Drehmomente übertragen werden und die mit dieser Kupplung ausgestattet sind.

Die erfindungsgemäße Kupplung, umfasst
- zwei um eine gemeinsame Drehachse (5) laufende, jedoch relativ zueinander verdrehbare Kettenräder (1,3), und
- eine Duplexrollenkette, von welcher jeweils eine Kettenbahn (12,13) einem der Kettenräder zugeordnet ist, wobei
- die Zähne eines ersten Kettenrades (1) in Form federvorgespannter Rastbolzen (2) ausgebildet sind, die sich
- bei Unterschreitung eines vorgegebenen Grenzdrehmomentes aufgrund der Federvorspannung in Eingriff mit der zugeordneten Kettenbahn (12), und
- bei Überschreitung des Grenzdrehmomentes aufgrund einer gegen die Federvorspannung gerichteten, vom Drehmoment abhängigen Kraftkomponente außer Eingriff befinden, sodass lediglich
- die Übertragung von Drehmomenten, die kleiner sind als das Grenzdrehmoment, von dem ersten Kettenrad (1) auf die Duplexrollenkette oder umgekehrt von der Duplexrollenkette auf das erste Kettenrad erfolgt.

## Beschreibung

Die Erfindung bezieht sich auf eine Drehmoment begrenzende Kupplung geringer Baugröße sowie auf Vorrichtungen, die über Getriebeglieder zur Übertragung von Drehmomente verfügen und in diesem Zusammenhang mit der erfindungsgemäßen Kupplung ausgestattet sind.

Drehmoment begrenzende Kupplungen, auch als Überlastkupplungen oder Sicherheitskupplungen bezeichnet, sind an sich bekannt. Neben Kupplungen, die nach hydrodynamischen oder elektrodynamischen Funktionsprinzipien arbeiten, wurden bereits rein mechanische Sicherheitskupplungen entwickelt, die das Drehmoment kraft-oder formschlüssig übertragen bzw. die Übertragung durch eine Unterbrechung des Kraft- oder Formschlusses beenden.

Kraftschlüssig wirkende Sicherheitskupplungen werden in der Regel als Rutschkupplungen bezeichnet. Formschlüssig arbeitende Sicherheitskupplungen dagegen sind zum Beispiel Abscherbolzenkupplungen, bei denen ein Bolzen, der als Mitnehmer zwischen einer treibenden und einer getriebenen Kupplungshälfte dient, bei Erreichen des Grenzdrehmomentes bricht.

Ebenfalls formschlüssig arbeiten Sperrkörperkupplungen. Hierbei rutschen Mitnehmer, beispielsweise federbelastete Kugeln, Bolzen oder Klauen, bei Erreichen eines vorgegebenen Grenzdrehmomentes aus korrespondierenden Nuten, sodass die Übertragung der Drehbewegung unterbrochen wird. Sperrkörperkupplungen können auch so ausgeführt sein, dass sie sowohl trennen, wenn ein Drehmoment anliegt, das größer ist als das vorgegebene Grenzdrehmoment, aber auch schließen, sobald das Drehmoment kleiner ist als das Grenzdrehmoment. Diesem Sachgebiet ist auch die Drehmoment begrenzende Kupplung zuzuordnen, die Gegenstand der hier vorliegenden Erfindung ist.

Nachteilig bei den bisher bekannten Kupplungen dieser Art ist ein in Bezug auf das zu übertragende Drehmoment verhältnismäßig großes Bauvolumen, was besonders dann hinderlich und unvorteilhaft ist, wenn bereits ausgeführte Vorrichtungen, in denen Drehmomente übertragen werden, aus Sicherheitsgründen nachträglich mit einer Einrichtung zur Drehmomentbegrenzung ausgestattet werden sollen. In diesen Fällen steht für die nachzurüstende Kupplung meist nur ein sehr begrenzter Bauraum zur Verfügung.

Dies trifft beispielsweise zu auf Vorrichtung zum Zerkleinern von Gegenständen, wie Getränkeflaschen oder Getränkedosen aus Kunststoff oder Weißblech, bei denen die Gegenstände zwischen Schneidwalzen zerkleinert werden, eine Zuführwalze die Gegenstände einzeln zwischen die Schneidwalzen befördert und Getriebeglieder zur Übertragung von Drehmomenten von der Abtriebswelle eines Motors auf die Zuführwalze und die Schneidwalzen vorhanden sind. Da die zu zerkleinernden Gegenstände aus weichem Material bestehen, sind bei normal üblichem Einsatz Bruchschäden auch ohne eine Drehmomentbegrenzung nicht zu erwarten. Bei Einsatz unter besonderen Bedingungen allerdings können eine Drehmomentbegrenzung und damit die Nachrüstung einer entsprechenden Kupplung wünschenswert sein.

Davon ausgehend liegt der Erfindung die Aufgabe zugrunde, eine Drehmoment begrenzende Kupplung zu schaffen, die in Bezug auf die zu übertragenden Drehmomente eine verhältnismäßig geringe Baugröße aufweist.

Diese Aufgabe wird erfindungsgemäß gelöst mit einer Drehmoment begrenzenden Kupplung, welche umfasst:
- zwei Kettenräder, die nebeneinander angeordnet um eine gemeinsame immaterielle Drehachse laufen, dabei jedoch gegeneinander um diese Drehachse verdrehbar sind, und
- eine Doppelkette, von welcher jeweils eine Kettenbahn einem der beiden Kettenräder zugeordnet ist, wobei
- die Zähne bei einem ersten Kettenrad in Form von federvorgespannten Mitnehmern ausgebildet sind, die sich
- bei Unterschreitung eines vorgegebenen Grenzdrehmomentes aufgrund der Federvorspannung in Eingriff mit der zugeordneten Kettenbahn, und
- bei Überschreitung des Grenzdrehmomentes aufgrund einer gegen die Federvorspannung gerichteten Kraftkomponente, deren Größe vom Drehmoment abhängig ist, außer Eingriff befinden, sodass - je nach Ausgestaltung der Erfindung - lediglich
- die Übertragung von Drehmomenten, die kleiner sind als das Grenzdrehmoment, von dem ersten Kettenrad über die Doppelkette auf das zweite Kettenrad, von dem zweiten Kettenrad über die Doppelkette auf das erste Kettenrad oder von der Doppelkette auf das erste und zweite Kettenrad erfolgt, wobei
- die Zähne des zweiten Kettenrades sich stets in Eingriff mit der zugeordneten Kettenbahn befinden.

Von diesen Varianten ist in einer bevorzugten Ausgestaltung das erste Kettenrad über Getriebeglieder drehstarr mit der Abtriebswelle eines Motors verbunden. Solange das zu übertragende Drehmoment dabei kleiner ist als das vorgegebene Grenzdrehmoment, stehen die federvorgespannten Mitnehmer in Eingriff mit der zugeordneten Kettenbahn und das Drehmoment wird auf diese Kettenbahn und, da beide Kettenbahnen der Doppelkette zwangsgekoppelt sind, auch auf die zweite Kettenbahn übertragen. Damit erfolgt zugleich auch die Übertragung der Drehbewegung des ersten Kettenrades auf das zweite Kettenrad, dessen Zähne sich stets in Eingriff mit der ihn zugeordneten Kettenbahn befinden.

Die am Umfang des ersten Kettenrades angeordneten Mitnehmer sind radial beweglich gelagert, und die Federvorspannung sorgt dafür, dass sie um ein konstruktiv vorgegebenes Maß von der Umfangsfläche hervorstehen. Eine von der Kette auf die Mitnehmer ausgeübte Kraftkomponente wirkt in radialer Richtung entgegengesetzt zur Federvorspannkraft. Überschreitet das zu übertragende Drehmoment das Grenzdrehmoment, wird diese Kraftkomponente größer als die Federvorspannkraft, infolge dessen geraten die Mitnehmer außer Eingriff, die Kette wird vom ersten Kettenrad nicht mehr mitgenommen und dadurch auch die Drehbewegung nicht mehr auf das zweite Kettenrad übertragen.

Die Doppelkette kann Teil eines Kettengetriebes sein, das zur Übertragung des Drehmomentes auf mindestens ein Kettenrad bzw. eine Antriebswelle dient, deren Drehachse parallel zur Drehachse des ersten und zweiten Kettenrades ausgerichtet ist. Vorzugsweise ist das zweite Kettenrad drehstarr mit einer Abtriebswelle gekoppelt, deren Drehachse in der Drehachse des ersten und zweiten Kettenrades liegt.

Die erfindungsgemäße Drehmoment begrenzende Kupplung erfüllt auf diese Weise nicht nur die Forderung nach geringer Baugröße, sondern ermöglicht zudem auch die Übertragung der Drehbewegung in orthogonalen Richtungen.

Vorzugsweise ist die Doppelkette als Duplexrollenkette ausgebildet, während die Mitnehmer als Bolzen oder Stifte ausgeführt sind, die an ihren von der Umfangsfläche des Zahnrades hervorstehen Enden abgerundet oder so angeschrägt sind, dass das Drehmoment eine aufgrund der Abrundung oder Anschrägung radial zur Drehachse hin gerichtete Kraftkomponente erzeugt, die, wie beschrieben, bei unzulässig hohem Drehmoment größer ist als die Federvorspannkraft und so die Unterbrechung der Drehmomentübertragung bewirkt.

Sinngemäß zu der bisher beschrieben Übertragungsrichtung des Drehmomentes von dem ersten Kettenrad auf die Doppelkette liegt es ebenfalls im Rahmen der Erfindung, die Abrundungen oder Anschrägungen so auszuführen, dass eine Unterbrechung der Drehmomentübertragung dann erfolgt, wenn Drehmomente von der Doppelkette bzw. von einem Kettengetriebe, dessen Teil die Doppelkette ist, auf das erste Kettenrad oder auch vom zweiten Kettenrad mittels der Doppelkette auf das erste Kettenrad übertragen werden sollen und dabei das zu übertragende Drehmoment begrenzt werden soll. In diesen Fällen ist nicht das erste Kettenrad drehstarr mit der Abtriebswelle eines Motors verbunden, sondern das zweite Kettenrad, und zwar entweder über das Kettengetriebe oder eine direkte Ankopplung an eine Motorabtriebswelle.

Der Gegenstand der Erfindung schließt weiterhin Vorrichtungen ein, die über Getriebeglieder zur Übertragung von Drehmomente verfügen und die ausgestattet sind mit einer Drehmoment begrenzende Kupplung, welche die erfindungsgemäßen Merkmale aufweist.

Dies kann beispielsweise eine der bereits eingangs erwähnten Vorrichtungen zum Zerkleinern von Gegenständen wie Getränkeflaschen oder Getränkedosen aus Kunststoff oder Weißblech sein, bei der zwischen die Getriebeglieder zur Übertragung des Drehmomentes von der Abtriebswelle des Motors auf die Zuführwalze und/oder die Schneidwalzen eine Drehmoment begrenzende Kupplung dieser Art eingeordnet ist, sodass bei Überschreitung eines vorgegebenen, auf die Zuführwalze und/oder die Schneidwalzen wirkenden Grenzdrehmomentes die Drehmomentübertragung selbsttätig unterbrochen und bei Unterschreitung des Grenzdrehmomentes selbsttätig fortgesetzt wird.

Die Erfindung soll nachfolgend anhand von Ausführungsbeispielen näher erläutert werden. In den zugehörigen Zeichnungen zeigen:
- Fig. 1: das Wirkprinzip der erfindungsgemäßen Kupplung anhand einer konkreten Ausführung,
- Fig. 2: ein Beispiel für eine Vorrichtung zum Zerkleinern von Getränkeflaschen oder Getränkedosen aus Kunststoff oder Weißblech nach Stand der Technik,

- Fig. 3: die Vorrichtung aus Fig. 2, jedoch ausgestattet mit einer Ausgestaltungsvariante der erfindungsgemäßen Drehmoment begrenzenden Kupplung.

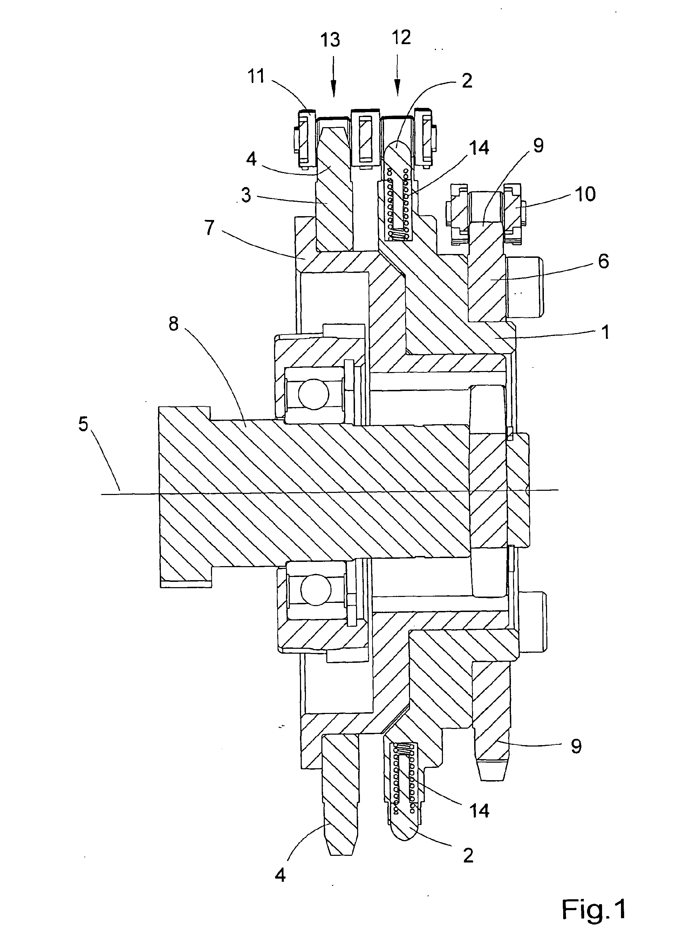

Das Beispiel der erfindungsgemäßen Kupplung nach Fig. 1 ist im Querschnitt dargestellt. Erkennbar sind ein Kettenrad 1, dessen Zähne in Form von Rastbolzen 2 ausgebildet sind, und ein Kettenrad 3 mit festen Zähnen 4. Beide Kettenräder 1, 3 sind nebeneinander angeordnet, wobei jedes für sich um ein und dieselbe immaterielle Achse 5 drehbar gelagert ist.

Dabei ist das Kettenrad 1 drehstarr mit einem weiteren Kettenrad 6 verbunden, und Kettenrad 3 ist, ebenfalls drehstarr, über eine Nabe 7 mit einer Abtriebswelle 8 verbunden.

Das Kettenrad 6 weist an seinem Umfang Zähne 9 auf, die formschlüssig mit einer Rollenkette 10 in Eingriff stehen. Die Rollenkette 10 ist Teil eines Kettengetriebes, welches eine Drehbewegung von einer Motorabtriebswelle (zeichnerisch nicht dargestellt) auf das Kettenrad 6 überträgt.

Die Rastbolzen 2 am Umfang des Kettenrades 1 und die Zähne 4 am Umfang des Kettenrades 3 greifen in eine Duplexrollenkette 11 ein, wobei die Rastbolzen 2 der einen Kettenbahn 12, die Zähne 4 der anderen Kettenbahn 13 zugeordnet sind.

Von der Motorabtriebswelle ausgehend wird die Drehbewegung auf das Kettenrad 6 und auf das hiermit drehstarr verbundene Kettenrad 1 übertragen. Mittels der Duplexrollenkette 11 erfolgt die Übertragung der Drehbewegung in der in Fig. 1 gezeigten Konstellation, in welcher sich die Rastbolzen 2 in Eingriff mit der Kettenbahn 12 befinden, weiter auf das Kettenrad 3 sowie über die Nabe 7 auf die Abtriebswelle 8.

Um zu verhindern, dass auf die Abtriebswelle 8 ein Drehmoment von einer solchen Größe übertragen wird, die zwar vom Motor generiert werden kann, jedoch die mit der Abtriebswelle 8 nachfolgend verbundenen Bauteile beschädigen könnte, sind die Rastbolzen 2, wie aus Fig. 1 ersichtlich, radial beweglich im Kettenrad 1 geführt und dabei mittels Druckfedern 14 vorgespannt, sodass sie aus der Umfangsfläche des Kettenrades 1 herausragen und somit ihr Eingriff in die Kettenbahn 12 gewährleistet ist.

An ihren von der Umfangsfläche des Zahnrades 1 radial nach außen gerichteten Enden sind die Rastbolzen 2 abgerundet. Aufgrund einer vorgegebenen Tiefe des Eingriffs der Rastbolzen 2 in die Kettenbahn 12 und einer konkreten Gestalt der Abrundung wirken eine auf das Grenzdrehmoment abgestimmte Kraftkomponente in tangentialer Richtung und eine Kraftkomponente in radialer Richtung auf jeden Rastbolzen 2.

Überwiegt die tangentiale Komponente, werden die Rollen von den Rastbolzen 2 mitgenommen und das Drehmoment wird von dem Kettenrad 1 auf die Duplexrollenkette 11 und wie bereits beschrieben weiter auf die Abtriebswelle 8 übertragen.

Blockiert beispielsweise eine nachfolgend an die Abtriebswelle 8 angeschlossene Baugruppe die Drehbewegung, nimmt das Drehmoment zu, die in radialer Richtung auf die sich in Eingriff befindenden Rastbolzen 2 wirkende Kraftkomponente steigt an und wird, wenn das Drehmoment den Wert des Grenzdrehmomentes erreicht, größer als die Vorspannkraft der Druckfeder 14, was zur Folge hat, dass die Rastbolzen 2 aus dem Raum zwischen den Rollen verdrängt werden, außer Eingriff geraten und so die Unterbrechung der Drehmomentübertragung bewirkt wird. Die Rastbolzen 2 nehmen die Duplexrollenkette 11 jetzt nicht mehr mit, sondern "ratschen" über deren Rollen.

Wird die Ursache für die Erhöhung des Drehmomentes behoben, ändert sich das Verhältnis der tangential und radial auf die Rastbolzen 2 einwirkenden Kraftkomponenten so, dass die Rastbolzen 2 wieder in Eingriff kommen und die Übertragung der Drehbewegung von Kettenrad 1 auf Kettenrad 3 fortgesetzt wird.

Das Grenzdrehmoment ist mit der Konfiguration des Kettenrades 1 fest vorgegeben, beispielsweise mit der Form der Abrundungen an den Rastbolzen 2, der Federvorspannkraft und/oder mit der Anzahl der Rastbolzen 2 am Umfang des Kettenrades 1.

Wie am bisher beschriebenen Beispiel gezeigt, hat die Duplexrollenkette 11 die Funktion der Übertragung der Drehbewegung bzw. des Drehmomentes von dem Kettenrad 1 auf das Kettenrad 3 und damit auf die unmittelbar und drehstarr mit dem Kettenrad 3 verbundene Abtriebswelle 8 zu erfüllen.

Diesbezüglich kann die Duplexrollenkette 11 lediglich als Kettenstück ausgeführt sein, dessen Länge maximal dem Umfang des Kettenrades 3 entspricht. Die Kettenbahn 13 dieses Kettenstückes ist in diesem Fall mechanisch fest auf dem Umfang des Kettenrades 3 angeordnet und rotiert stets mit dem Kettenrad 3, ohne sich, wie dies bei einem Kettengetriebe der Fall ist, in Abhängigkeit des Drehwinkels zeitweise zu lösen. Mit einer solchen Ausgestaltung lässt sich eine sehr geringe Baugröße der erfindungsgemäßen Kupplung erzielen.

In einer davon abweichenden beispielhaften Ausgestaltungsvariante ist die Duplexrollenkette 11 nicht in der vorbeschriebenen Weise fest mit dem Kettenrad 3 verbunden, sondern ist Zugmittel eines Kettengetriebes, welches die Drehbewegung des Kettenrades 3 bzw. das Drehmoment zugleich auf ein weiteres Kettenrad (zeichnerisch nicht dargestellt) überträgt, dessen Drehachse parallel zur Drehachse der Kettenräder 1, 3 ausgerichtet ist. Mit dieser Option kann die erfindungsgemäße Kupplung zur Verzweigung der Drehbewegung dienen.

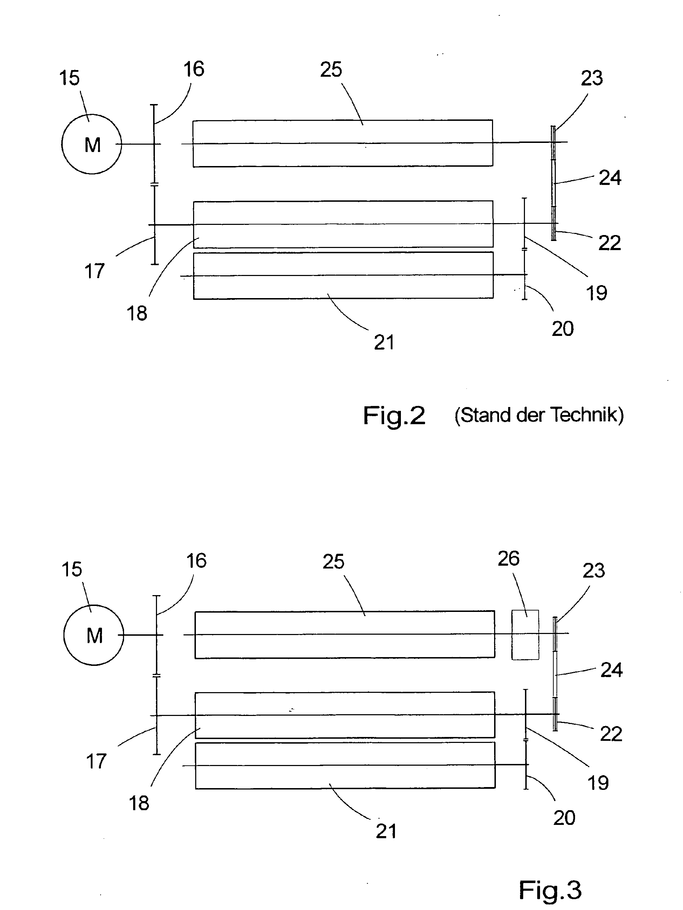

In Fig. 2 sind in einer Prinzipskizze die wesentlichen Getriebebaugruppen einer Vorrichtung zum Zerkleinern von Getränkeflaschen oder Getränkedosen aus Kunststoff oder Weißblech nach Stand der Technik dargestellt. Angedeutet ist ein Motor 15, auf dessen Abtriebswelle ein Zahnrad 16 sitzt, das mit einem weiteren Zahnrad 17 in Eingriff steht. Das Zahnrad 17 überträgt das vom Motor 15 generierte Drehmoment auf eine erste Schneidwalze 18, zugleich über ein Zahnradpaar 19, 20 auf eine zweite Schneidwalze 21 sowie über ein Kettengetriebe, bestehend aus einem

Kettenradpaar 22, 23 und einer Rollenkette 24, auf eine Dosierwelle 25.

An der Dosierwelle 25 sind Zubringerflügel angeordnet (zeichnerisch nicht dargestellt), welche die zu zerkleinernden Gegenstände vereinzeln und aufeinander folgend zwischen die Schneidwalzen 18, 21 befördern.

Vorrichtungen dieser Art sind beispielsweise aus DE 103 53 188 A1 bekannt, ihre Funktionsweise muss deshalb an dieser Stelle nicht näher erläutert werden. Bei solchen Vorrichtungen erfordert der Arbeitsgang der Schneidwalzen 18, 21 ein größeres Drehmoment als die Dosierwelle 25, die daher weniger Torsionssteif ausgeführt ist. Blockiert die Dosierwelle 25, wird sie trotzdem mit dem vollen, für die Schneidwalzen 18, 21 ausgelegten Drehmoment belastet, was bei voller Blockierung Bruchschäden zur Folge haben kann.

Um dem Vorzubeugen, ist im Stand der Technik das Kettenrad 23 über einen Abscherstift mit der Dosierwelle verbunden. Damit sind die Baugruppen der Dosierwelle 25 zwar geschützt, jedoch kommt es um so häufiger zum Bruch des Abscherstiftes, je extremer die Einsatzbedingungen sind, was einen entsprechend häufigen Einsatz eines Servicetechnikers erfordert, verbundenen mit Ausfallzeiten beim Anwender erhöhtem Aufwand an Kosten beim Gerätehersteller.

Die Nachrüstung einer Drehmoment begrenzenden Kupplung ist in diesen Fällen zwar wünschenswert, wird aber insofern behindert, als nicht ausreichend Raum zum Einbau einer Kupplung aus dem Stand der Technik zur Verfügung steht.

Dieses Problem wird vorteilhaft gelöst mit der erfindungsgemäßen Kupplung, da diese sehr wenig Bauraum erfordert. So genügt für den nachträglichen Einbau dieser Kupplung der in Fig. 3 markierte Bauraum 26, wobei hier vorteilhaft die oben beschriebene Ausgestaltungsvariante der erfindungsgemäßen Kupplung mit dem kleinsten Bauvolumen zur Anwendung kommen kann. Die Rollenkette 24 in Fig. 2 und Fig. 3 entspricht dabei der Rollenkette 10 in Fig. 1, die Dosierwelle 25 in Fig. 2 und Fig. 3 ist sinngemäß mit der Abtriebswelle 8 in Fig. 1 gekoppelt und rotiert wie diese um die Achse 5.

### Bezugszeichenliste

- 1: Kettenrad
- 2: Rastbolzen
- 3: Kettenrad
- 4: Zahn
- 5: Drehachse (immateriell)
- 6: Kettenrad
- 7: Nabe
- 8: Abtriebswelle
- 9: Zahn
- 10: Rollenkette
- 11: Duplexrollenkette
- 12: Kettenbahn
- 13: Kettenbahn
- 14: Druckfeder
- 15: Motor
- 16, 17: Zahnräder
- 18: Schneidwalze
- 19, 20: Zahnräder
- 21: Schneidwalze
- 22, 23: Kettenräder
- 24: Rollenkette
- 25: Dosierwelle
- 26: Bauraum

## Patentansprüche

1. Drehmoment begrenzende Kupplung, umfassend
- zwei nebeneinander um eine gemeinsame Drehachse (5) laufende, dabei jedoch gegeneinander um die Drehachse (5) verdrehbare Kettenräder (1, 3), und
- eine Doppelkette, von welcher jeweils eine Kettenbahn (12, 13) einem der Kettenräder (1, 3) zugeordnet ist, wobei
- die Zähne bei einem ersten Kettenrad (1) in Form federvorgespannter Mitnehmer ausgebildet sind, die sich
- bei Unterschreitung eines vorgegebenen Grenzdrehmomentes aufgrund der Federvorspannung in Eingriff mit der zugeordneten Kettenbahn (12), und
- bei Überschreitung des Grenzdrehmomentes aufgrund einer gegen die Federvorspannung gerichteten, vom Drehmoment abhängigen Kraftkomponente außer Eingriff befinden, sodass lediglich
- die Übertragung von Drehmomenten, die kleiner sind als das Grenzdrehmoment, von dem ersten Kettenrad (1) über die Doppelkette auf das zweite Kettenrad (3), von dem zweiten Kettenrad (3) über die Doppelkette auf das erste Kettenrad (1) oder von der Doppelkette auf das erste und zweite Kettenrad (1, 3) erfolgt, wobei
- die Zähne (4) des zweiten Kettenrades (3) sich stets in Eingriff mit der zugeordneten Kettenbahn (13) befinden.

2. Drehmoment begrenzende Kupplung nach Anspruch 1, bei der das erste Kettenrad (1) über Getriebeglieder drehstarr mit der Abtriebswelle eines Motors gekoppelt und die Übertragung der Drehmomente von dem ersten Kettenrad (1) auf die Doppelkette und mittels der Doppelkette auf das zweite Kettenrad (3) vorgesehen ist.

3. Drehmoment begrenzende Kupplung nach Anspruch 2, bei welcher das zweite Kettenrad (3) drehstarr mit einer Abtriebswelle (8) gekoppelt ist, deren Drehachse in der Drehachse (5) des ersten und zweiten Kettenrades (1, 3) liegt.

4. Drehmoment begrenzende Kupplung nach einem der vorgenannten Ansprüche, bei welcher die Doppelkette Teil eines Kettengetriebes ist zur Übertragung des Drehmomentes auf mindestens ein Kettenrad, dessen Drehachse parallel zur Drehachse (5) des ersten und zweiten Kettenrades (1, 3) ausgerichtet ist.

5. Drehmoment begrenzende Kupplung nach einem der vorgenannten Ansprüche, bei der die Doppelkette als Duplexrollenkette (11) ausgebildet ist.

6. Drehmoment begrenzende Kupplung nach Anspruch 5, bei der die Mitnehmer als abgerundete oder angeschrägte Rastbolzen (2) ausgebildet und radial beweglich im ersten Kettenrad (1) geführt sind, sodass sie bei Unterschreitung des Grenzdrehmomentes mit einem von der Umfangsfläche des Kettenrades (1) hervorstehenden Abschnitt zwischen die Rollen der Duplexrollenkette (11) greifen und dadurch mindestens in einer Drehrichtung des Kettenrades (1) das Drehmoment auf die Duplexrollenkette (11) übertragen.

7. Vorrichtung, die über Getriebeglieder zur Übertragung von Drehmomente verfügt und in diesem Zusammenhang mit einer Kupplung nach einem der Ansprüche 1 bis 6 ausgestattet ist.

8. Vorrichtung nach Anspruch 7, insbesondere zum Zerkleinern von Gegenständen wie Getränkeflaschen oder Getränkedosen aus Kunststoff oder Weißblech, umfassend:
- Schneidwalzen (18, 21), zwischen denen die Gegenstände zerkleinert werden,
- eine Dosierwelle (25), welche die Gegenstände einzeln zwischen die Schneidwalzen (18, 21) befördert,
- einen Motor (15), sowie
- Getriebeglieder, die ausgebildet sind zur Übertragung von Drehmomenten von der Abtriebswelle des Motors (15) auf die Dosierwalze (25) und die Schneidwalzen (18, 21), wobei
- die Drehmoment begrenzende Kupplung so zwischen Getriebeglieder eingeordnet ist, sodass
- bei Überschreitung eines auf die Dosierwalze (25) wirkenden Grenzdrehmomentes die Drehmomentübertragung selbsttätig unterbrochen und bei Unterschreitung des Grenzdrehmomentes selbsttätig fortgesetzt wird.
